# FASCICULE DE BREVET EUROPEEN

(11) **EP 2 835 939 B1**
(45) Date de publication et mention de la délivrance du brevet: **05.06.2019**
(21) Numéro de dépôt: 14179542.7
(22) Date de dépôt: 01.08.2014
(51) Int. Cl.: H04L 12/58

(54) **Procédé de gestion, dans un premier dispositif, de l'écriture d'une réponse à un message reçu depuis un second dispositif.**
Verfahren zum Verwalten, in einem ersten Gerät, des Schreibens von einer Antwort auf eine Nachricht von einem zweiten Gerät empfangenen.
Method of managing, in a first device, the writing of a response to a message received from a second device.

(30) Priorité: 05.08.2013 FR 1357784
(43) Date de publication de la demande: 11.02.2015
(73) Titulaire: Orange, 75015 Paris (FR)
(72) Inventeur: Cazoulat, Renaud, 35760 Saint Gregoire (FR); Brault, Sébastien, 22560 PLEUMEUR-BODOU (FR); Morvillez, Erwan, 35000 RENNES (FR)

(56) Documents cités:
- WO-A2-2008/030702
- US-A1- 2012 094 637
- US-A1- 2012 165 047
- US-A1- 2012 290 664

## Description

### Domaine technique

L'invention se rapporte à un procédé de gestion, dans un premier dispositif, de l'écriture d'une réponse à un message reçu depuis un second dispositif.

Le premier dispositif vise tout particulièrement un dispositif dont les ressources physiques et logicielles sont telles que l'écriture d'un message est difficile voire impossible. Cela est le cas par exemple lorsqu'un dispositif ne dispose pas d'un clavier permettant la saisie de caractères.

Le deuxième dispositif vise tout particulièrement un dispositif apte à communiquer à la fois avec le premier dispositif via un premier canal de communication et avec d'autres dispositifs via un au moins un autre canal de communication.

Dans la suite de la description, un premier dispositif sera illustré au moyen d'une montre connectée, et un deuxième dispositif sera illustré au moyen d'un smartphone.

Un canal de communication inclut à la fois un réseau de communication (non filaire) de type WIFI, 3G, etc., et/ou une connexion filaire de type USB.

Dans notre exemple, le premier canal choisi est le réseau Bluetooth (non filaire). Le deuxième canal sera un réseau de type Internet.

### Etat de la technique

Une montre connectée peut se connecter à un smartphone via un réseau de communication. Dans cette configuration, le smartphone peut émettre des notifications à la montre comme par exemple,
- une notification relative à la réception d'un message téléphonique,
- une notification relative à la réception d'un message court de type SMS,
- etc.

Le smartphone communique avec la montre via un réseau de communication tel que le Bluetooth. La norme Bluetooth permet de transmettre à la montre certaines notifications (uniquement SMS, mails, appels) mais ne permet pas d'y répondre.

En conséquence, l'utilisateur est obligé d'utiliser le smartphone pour répondre. L'utilisateur perd ainsi le bénéfice de la discrétion apportée par la montre connectée ; en particulier lorsque le smartphone n'est pas facilement accessible par exemple parce qu'il se trouve dans la poche ou dans le sac à main de l'utilisateur.

L'invention offre une solution ne présentant pas les inconvénients de l'état de la technique, au -delà d'une sélection de réponses pré-définies disponibles sur le dispositif destinataire du message, telles que divulguées, par exemple, dans les documents WO 2008/030702 A2 et US 201270165047 A1.

### L'invention

A cet effet, selon un aspect fonctionnel, l'invention a pour objet un procédé de gestion tel que défini dans la revendication 1.

Grâce à l'invention, le premier dispositif n'a plus la gestion de l'écriture de la réponse. En effet, la (ou les) réponse possible est fournie par le second dispositif au premier dispositif. Il suffit au niveau du premier dispositif de sélectionner une réponse et de transmettre cette réponse au deuxième dispositif qui se charge ensuite de traiter cette réponse par exemple en la transmettant sur le réseau à destination d'un troisième dispositif concerné par la réponse.

De cette manière, l'utilisateur peut recevoir des notifications et répondre à ces notifications directement depuis le second dispositif et simplement car l'étape de création de la réponse est réduite à une sélection d'une réponse parmi au moins une réponse proposée. L'utilisateur n'a donc plus à se servir de son smartphone pour répondre.

La requête visée peut concerner une application logicielle parmi plusieurs applications. Selon un mode de mise en oeuvre particulier de l'invention, ladite au moins une réponse possible est fonction de l'application. Le deuxième dispositif dispose à cet effet d'un module de sélection aptes à sélectionner un ensemble de réponses possibles à transmettre au premier dispositif ; la sélection s'effectuant à la base de l'application visée. L'ensemble en question de réponses est défini par exemple au préalable par l'utilisateur.

L'application est par exemple une application de téléphonie. Aussi, selon un mode de mise en oeuvre particulier de l'invention, qui pourra être mis en oeuvre alternativement ou cumulativement avec le précédent, ladite au moins une réponse possible est fonction de l'appelant. Par exemple, le second dispositif comprend une liste de contacts susceptibles d'appeler ce second dispositif; l'utilisateur peut configurer les réponses possibles en fonction des utilisateurs de la liste. Ensuite, en fonction de l'appelant, le deuxième dispositif transmet au premier dispositif l'ensemble des réponses possibles définies lors de la configuration visée ci-dessus. De cette manière, la liste des réponses possibles n'est pas figée mais varie en fonction de l'application, voire de l'appelant dans le cas d'une application de téléphonie.

Selon un autre aspect fonctionnel, l'invention a trait à un procédé de gestion, dans un dispositif, dit second dispositif, de l'émission, via un premier canal de communication, d'un premier message à destination d'un premier dispositif, le second dispositif ayant reçu au préalable un second message depuis un second canal de communication, caractérisé en que le premier message inclut au moins une réponse possible à sélectionner.

Selon un aspect matériel, l'invention a trait à un dispositif, dit premier dispositif, comprenant un module de réception pour la réception d'un message issu d'un second dispositif, caractérisé en ce que le module de réception est apte à recevoir en outre au moins une réponse possible audit message et en ce qu'il comprend un module de sélection d'un message.

Selon un autre aspect matériel, l'invention a trait à un dispositif, dit second dispositif, tel que défini dans la revendication 4.

Selon un autre aspect matériel, l'invention a trait à un premier programme d'ordinateur apte à être mis en oeuvre sur le premier dispositif défini ci-dessus, le programme comprenant des instructions de code qui, lorsque le premier programme est exécuté par un processeur, réalise le procédé de gestion exécuté au niveau du premier dispositif tel que défini ci-dessus.

Selon un autre aspect matériel, l'invention a trait à un support d'enregistrement lisible par un processeur de données sur lequel est enregistré un programme comprenant des instructions de code de programme pour l'exécution du procédé de gestion exécuté au niveau du premier dispositif tel que défini ci-dessus.

Selon un autre aspect matériel, l'invention a trait à un programme d'ordinateur apte à être mis en oeuvre sur le second dispositif défini ci-dessus, le programme comprenant des instructions de code qui, lorsque le programme est exécuté par un processeur, réalise le procédé de gestion exécuté au niveau du second dispositif tel que défini ci-dessus et dans la revendication 4.

Selon un autre aspect matériel, l'invention a trait à un support d'enregistrement lisible par un processeur de données sur lequel est enregistré un programme comprenant des instructions de code de programme pour l'exécution du procédé de gestion exécuté au niveau du second dispositif tel que défini ci-dessus et dans la revendication 4.

L'invention sera mieux comprise à la lecture de la description qui suit, donnée à titre d'exemple et faite en référence aux dessins annexés sur lesquels :
La figure 1 représente un système informatique dans lequel l'invention peut être mise en oeuvre selon un mode de réalisation.
Les figures 2 et 3 sont des vues schématiques de la structure du premier dispositif et du deuxième dispositif, respectivement.
La figure 4 est une vue schématique d'échanges de messages selon un mode de réalisation décrit en référence à la figure 1.

### Description détaillée d'un exemple de réalisation illustrant l'invention

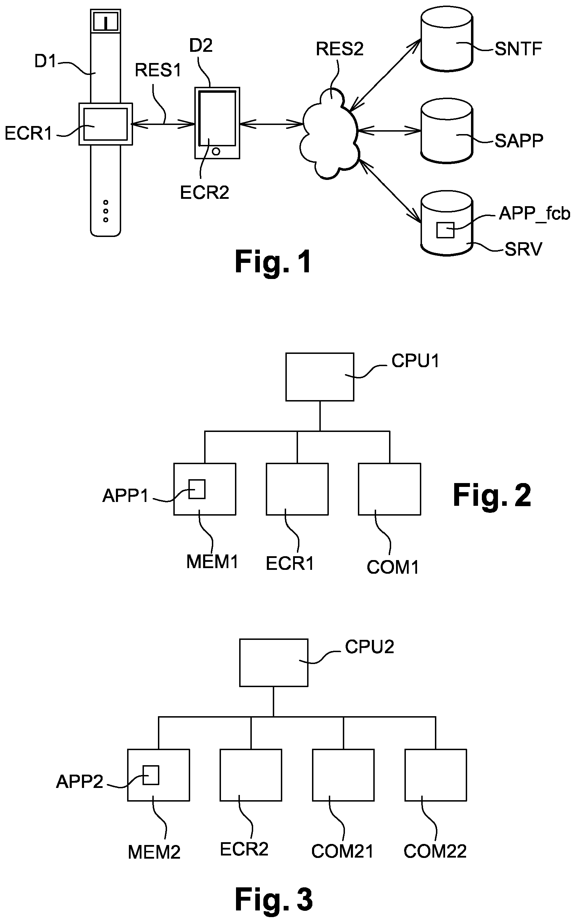

La figure 1 représente un système SYS comprenant un premier dispositif D1 illustré au moyen d'une montre. Ce premier dispositif est dans notre exemple, une montre connectée incluant un environnement informatique permettant l'exécution d'une première application APP1 dont le fonctionnement sera expliqué dans la suite de la description.

En référence à la figure 2, cette montre dispose, entre autres,
- d'un module de sélection MSEL permettant la sélection d'un texte sur l'écran ;
- d'un module d'affichage ECR1 illustré par un écran ;
- d'un module de communication COM1 pour communiquer notamment avec le smartphone.

A noter ici que ce premier dispositif pourrait aussi être des lunettes connectées, ou tout autre objet communiquant.

Le système comprend aussi un deuxième dispositif D2 illustré par l'intermédiaire d'un smartphone apte à communiquer avec le premier dispositif au moyen d'un premier canal de communication illustré au moyen d'un réseau de communication RES1 ; dans notre exemple, ce premier réseau est un réseau Bluetooth. Un autre deuxième réseau pourrait être utilisé en lieu et place du réseau Bluetooth comme par exemple une liaison filaire par exemple un câble USB.

Dans notre exemple, le smartphone peut également communiquer via un second canal de communication illustré au moyen d'un réseau de communication RES2 avec un serveur de notifications. Pour cela, en réréfrence à la figure 3, le smartphone comprend
- un module mémoire MEM2 dans lequel est stockée une seconde application APP2 ;
- un module d'affichage ECR2 illustré au moyen d'un écran ;
- un premier module de communication COM21 pour communiquer avec la montre D1 via le premier réseau RES1 ;
- un second module de communication COM22 pour communiquer avec le second réseau RES2.

Dans notre exemple, le second réseau est un réseau Internet.

Rappelons ici que le premier réseau et le second réseau sont quelconques ; tous autres canaux de communication autres que ceux qui servent ici à illustrer l'invention auraient pu être utilisés.

Le système comprend en outre un serveur de notifications SNTF. Ce serveur de notifications agrège une pluralité de messages d'origine diverses et variées. Ce serveur a pour fonction notamment de recevoir des notifications et de traiter ces notifications de manière à transmettre à destination du smartphone un message.

L'origine des notifications en question est quelconque. Par exemple, une notification peut provenir de l'une des sources suivantes :
- Un serveur de courrier électronique ;
- Un serveur dédié à la téléphonie permettant une mise en relation téléphonique ou un échange de messages courts ;
- Une application de communication du type Facebook (marque déposée) ;
- Une application de type agenda ;
- Una application météo ;
- Etc.

Dans notre exemple de réalisation, le système SYS comprend en outre un serveur applicatif SAPP pour l'envoi de messages courts SMS. Ce serveur d'envoi de SMS communique avec le serveur de notification décrit ci-dessus.

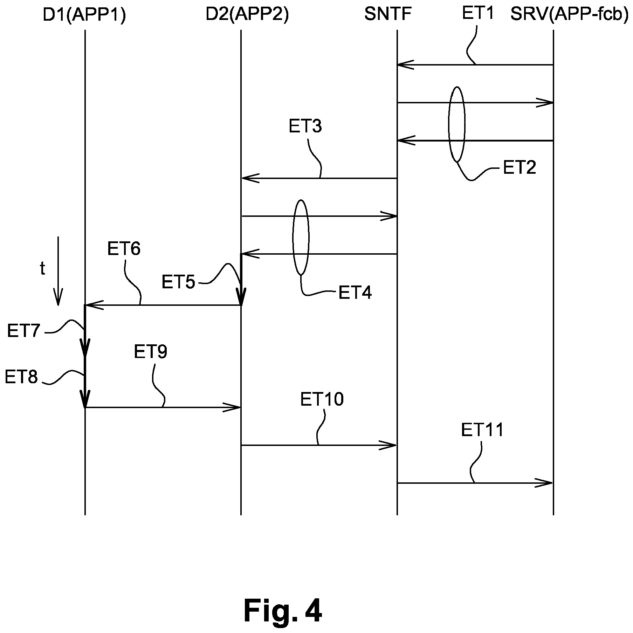

La figure 4 est une vue schématique des échanges de messages illustrant un mode de réalisation du procédé de l'invention. Le procédé comprend plusieurs étapes référencées ET1 à ET11.

Lors d'une première étape ET1, une application APP-fcb de communication, par exemple une application Facebook, hébergée sur un serveur SRV, émet une notification signalant la réception d'un message MSG sur le compte de l'utilisateur UT.

Lors d'une deuxième étape ET2, le serveur de notification SNTF récupère les données relatives au message MSG reçu. Le message comprend par exemple un texte et une image. L'image est par exemple au format JPEG (acronyme anglo-saxon de Joint Photographie Experts Group).

Lors d'une troisième étape ET3, le serveur de notification SNTF émet une notification à la deuxième application APP2 présente sur le deuxième dispositif à savoir le smartphone D2.

Lors d'une quatrième étape ET4, la deuxième application APP2 récupère le message sur le serveur de notification SNTF.

Selon une variante, le serveur aurait pu émettre à la fois la notification et le message, évitant de cette façon à la deuxième application de récupérer le message sur le serveur SNTF.

Lors d'une cinquième étape ET5, optionnellement, la deuxième application modifie l'image de manière à ce qu'elle ait un format compatible avec les ressources physiques et logicielles présentes sur le premier terminal.

Lors d'une sixième étape ET6, la deuxième application transmet à la première application le message, l'image modifiée et au moins une réponse possible par exemple « j'aime » ou « super » ou « je n'aime pas ».

Le format du message est par exemple le suivant :

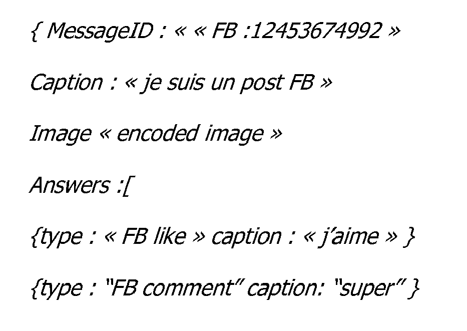

Lors d'une septième étape ET7, la première application APP1 reçoit le message issu de la deuxième application et l'interprète en affichant le texte correspondant à l'attribut « caption » à savoir « je suis un post FB ». La première application interprète également l'image reçue et l'affiche également sur le premier écran ECR1.

La première application APP1 affiche également la liste de réponses possibles. Dans notre exemple, la première application requiert l'affichage des deux propositions de réponse à savoir :
- J'aime
- Super

Lors d'une huitième étape ET8, l'utilisateur sélectionne la réponse souhaitée par exemple « J'aime ».

Lors d'une neuvième étape ET9, la première application APP1 transmet la réponse sélectionnée à destination de la deuxième application APP2.

Lors d'une dixième étape ET10, la deuxième application APP2 reçoit la réponse et réalise une action prédéfinie.

L'action prédéfinie peut être par exemple :
- Un établissement d'un appel téléphonique
- Un envoi d'un message au serveur de notifications, le message incluant par exemple
   ∘ la réponse sélectionnée « j'aime » de manière à ce que cette réponse soit publiée dans l'application APP-fcb
   ∘ et l'identifiant *MessageID à savoir FB :12453674992*

Si l'action est l'envoi d'un message au serveur de notification, lors d'une onzième étape ET11, l'application APP-fcb reçoit le message et publie le message.

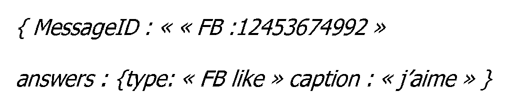

Précisons ici qu'un message prédéfini est par exemple un commentaire prédéfini ou une réponse prédéfinie.

Les réponses possibles peuvent varier. Par exemple, la requête peut être liée à une application donnée. Dans cette configuration, la (ou les) réponse(s) possible(s) est (sont) fonction(s) de l'application.

L'application peut être par exemple une application de téléphonie. Un appel téléphonique implique un dispositif appelant et un dispositif appelé ; ce dernier est dans notre exemple le deuxième dispositif D2. Dans cette configuration, le deuxième dispositif D2 peut comprendre une liste de contacts susceptibles d'appeler le deuxième dispositif. Dans notre exemple, la liste des réponses possibles peut être par exemple fonction de l'appelant.

Pour un premier appelant, correspondant par exemple à un premier contact de la liste, la liste des réponses peuvent être les suivantes :
- « je suis en réunion »
- « je te rappelle dans 10 mn »

Pour un deuxième appelant, correspondant par exemple à un deuxième contact de la liste, des réponses susceptibles d'être sélectionnées peuvent être les suivantes :
- « je ne suis pas disponible »
- « veuillez rappeler plus tard »
- « je vous rappellerai »

Les réponses possibles peuvent aussi varier en fonction du moment de la journée.

Précisons ici que le terme module utilisé dans la présente demande peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion, dans un dispositif (D2) dit second dispositif, de l'émission, via un premier canal de communication, d'un premier message à destination d'un premier dispositif (D1), comprenant les étapes suivantes dans le second dispositif (D2) :
a. réception (ET3, ET4) d'un message, dit second message, dont le second dispositif (D2) est destinataire, ce message étant reçu depuis un canal de communication (RES2), dit second canal de communication ;
b. transmission (ET6) d'un message, dit premier message, basé sur le second message reçu, à destination du premier dispositif (D1), via un canal de communication (RES1), dit premier canal, le premier message incluant aussi au moins une réponse possible au premier message ;
c. réception (ET8,ET9,ET10) d'une réponse issue du premier dispositif (D1), la réponse ayant été sélectionnée dans le message transmis.

2. Procédé selon la revendication 1, **caractérisé en ce que** le premier message est relatif à une application donnée, et **en ce que** ladite au moins une réponse possible est fonction de l'application.

3. Procédé selon la revendication 2, **caractérisé en ce que** l'application est une application de téléphonie et **en ce que** ladite au moins une réponse possible est fonction de l'appelant.

4. Dispositif (D2), dit second dispositif comprenant un module de gestion de l'émission, via un premier canal de communication (RES1), d'un premier message à destination d'un premier dispositif (D1), , le dispositif comprenant
a. un module de réception (COM22) d'un message, dit second message, dont le second dispositif (D2) est destinataire, ce message étant reçu depuis un canal de communication (RES2), dit second canal de communication ;
b. un module de transmission (COM21) apte à transmettre un message, dit premier message, basé sur le second message reçu, à destination du premier dispositif (D1), via un canal de communication, dit premier canal, le premier message incluant aussi au moins une réponse possible au premier message ;
c. un module de réception (COM21) d'une réponse issue du premier dispositif, la réponse ayant été sélectionnée dans le message transmis.

5. Programme d'ordinateur apte à être mis en oeuvre sur un dispositif (D2) tel que défini dans la revendication 4, le programme comprenant des instructions de code qui, lorsque le programme est exécuté par un processeur, réalise le procédé tel que défini dans la revendication 1.

## Patentansprüche

1. Verfahren zum Verwalten, in einem Gerät (D2), zweites Gerät genannt, des Sendens einer ersten Nachricht über einen ersten Kommunikationskanal an ein erstes Gerät (D1), umfassend die folgenden Schritte in dem zweiten Gerät (D2):
a. Empfangen (ET3, ET4) einer Nachricht, zweite Nachricht genannt, deren Empfänger das zweite Gerät (D2) ist, wobei diese Nachricht von einem Kommunikationskanal (RES2), zweiter Kommunikationskanal genannt, empfangen wird;
b. Übertragen (ET6) einer Nachricht, erste Nachricht genannt, die auf der empfangenen zweiten Nachricht basiert, über einen Kommunikationskanal (RES1), erster Kanal genannt, an das erste Gerät (D1), wobei die erste Nachricht auch mindestens eine mögliche Antwort auf die erste Nachricht beinhaltet;
c. Empfangen (ET8, ET9, ET10) einer Antwort vom ersten Gerät (D1), wobei die Antwort in der übertragenen Nachricht ausgewählt worden ist.

2. Verfahren nach Anspruch 1, **dadurch gekennzeichnet, dass** sich die erste Nachricht auf eine bestimmte Anwendung bezieht und dass die mindestens eine mögliche Antwort von der Anwendung abhängig ist.

3. Verfahren nach Anspruch 2, dadurch gekennnzeichnet, dass die Anwendung eine Telefonieanwendung ist und dass die mindestens eine mögliche Antwort vom Anrufer abhängig ist.

4. Gerät (D2), zweites Gerät genannt, umfassend ein Modul zum Verwalten des Sendens einer ersten Nachricht über einen ersten Kommunikationskanal (RES1) an ein erstes Gerät (D1), wobei das Gerät umfasst
a. ein Modul zum Empfangen (COM22) einer Nachricht, zweite Nachricht genannt, deren Empfänger das zweite Gerät (D2) ist, wobei diese Nachricht von einem Kommunikationskanal (RES2), zweiter Kommunikationskanal genannt, empfangen wird;
b. ein Modul zum Übertragen (COM21), das geeignet ist, eine Nachricht, erste Nachricht genannt, die auf der empfangenen zweiten Nachricht basiert, an das erste Gerät (D1) über einen Kommunikationskanal, erster Kanal genannt, zu übertragen, wobei die erste Nachricht auch mindestens eine mögliche Antwort auf die erste Nachricht beinhaltet;
c. ein Modul zum Empfangen (COM21) einer Antwort vom ersten Gerät, wobei die Antwort in der übertragenen Nachricht ausgewählt worden ist.

5. Computerprogramm, das geeignet ist, auf einem Gerät (D2) wie dem in Anspruch 4 definieren ausgeführt zu werden, wobei das Programm Codeanweisungen umfasst, die beim Abarbeiten des Programms durch einen Prozessor das in Anspruch 1 definierte Verfahren ausführen.

## Claims

1. Method for managing, in a device (D2) called second device, the transmission, via a first communication channel, of a first message to a first device (D1), comprising the following steps in the second device (D2) :
a. reception (ET3, ET4) of a message, called second message, for which the second device (D2) is the recipient, this message being received from a communication channel (RES2), called second communication channel;
b. transmission (ET6) of a message, called first message, based on the received second message, to the first device (D1), via a communication channel (RES1), called first channel, the first message also including at least one possible response to the first message;
c. reception (ET8, ET9, ET10) of a response from the first device (D1), the response having been selected in the transmitted message.

2. Method according to Claim 1, **characterized in that** the first message relates to a given application, and **in that** said at least one possible response depends on the application.

3. Method according to Claim 2, **characterized in that** the application is a telephony application, and **in that** said at least one possible response depends on the caller.

4. Device (D2), called second device, comprising a module for managing the transmission, via a first communication channel (RES1), of a first message to a first device (D1), the device comprising
a. a module (COM22) for receiving a message, called second message, for which the second device (D2) is the recipient, this message being received from a communication channel (RES2), called second communication channel;
b. a transmission module (COM21) able to transmit a message, called first message, based on the received second message, to the first device (D1), via a communication channel, called first channel, the first message also including at least one possible response to the first message;
c. a module (COM21) for receiving a response from the first device, the response having been selected in the transmitted message.

5. Computer program able to be implemented on a device (D2) as defined in Claim 4, the program comprising code instructions that perform the method as defined in Claim 1 when the program is executed by a processor.
